# EUROPEAN PATENT APPLICATION

(11) **EP 0 695 623 A2**
(43) Date of publication of application: **07.02.1996**
(21) Application number: 95202141.8
(22) Date of filing: 04.08.1995
(51) Int. Cl.: B29C 63/02, B32B 31/00

(54) **Automatic apparatus for applying protective film to slabs of stone material**

(30) Priority: 05.08.1994 IT TV940099
(71) Applicant: BRETON AUTOMAZIONI Spa, I-31039 Riese Pio Xo, (Treviso) (IT)
(72) Inventor: Murarotto, Emilio, IT-31033 Castelfranco Veneto (Treviso) (IT)
(74) Representative: Caregaro, Silvio

(57) **Abstract**

An automatic apparatus for applying a protective film to slabs of stone material by means of adhesive comprises an applicator device 50 for applying adhesive material, preferably in the form of pads 62 of double sided adhesive tape, to pads of predetermined position and size on the upper surfaces of the slab 10A, a roll 17 which supplies the film 12 and is arranged above the path of advance of the slabs 10, 10A and from which the film 12 is unwound in the direction of advance of the slabs 10, 10A and is applied to the latter by pressure means 18 arranged downstream of the roll 17. Control means provide for the movement of the pressure means 18 between an inactive position and an operating position in which they engage the slabs 10, 10A in order to apply the film 12 to them as they advance towards a discharge station of the machine tool. Cutting means 20 are activated when the film 12 has been applied to the slabs 10, 10A while the film is maintained between a lower pressure member 28 and corresponding upper pressure members 26 associated with the cutting means 20.

## Description

The present invention relates to an automatic apparatus for applying a protective film to slabs of stone material, for example in the output station of a machine tool used for their surface treatment.

It is known that slabs of stone material obtained by cutting from a block of such material are subjected to a series of machining operations before being stored ready to be despatched to the buyer. A typical machining operation is a surface treatment for the purpose of polishing one of their faces. These machining operations are carried out in a machine tool from the output station of which the slabs are discharged and are conveyed by a motorised roller system as far as a discharge station. The discharge station is provided with a suitable device for taking up one machined slab at a time from the respective station of the machine tool and for transferring it to a station for collecting the machined slabs.

Apparatuses of this type are known and it is also known that they substantially comprise, in the collecting station, an inclined support on which the slabs are deposited one at a time and rest against the support next to one another with their opposing faces in mutual contact in a substantially vertical and slightly inclined position.

It is known that machined slabs have a smooth polished face, which is the one which has undergone treatment, while the other face, which has not been treated or has undergone a different machining operation, is rough or at least unpolished. Given that the slabs are generally deposited with the polished faces in contact with the rough faces, it will be appreciated that this situation is extremely unfavourable for the polished faces because contact and, above all, friction with the rough surface of the adjacent slab during the deposition phase may also damage them to a considerable extent. In many cases, the damaged slabs have to be returned to the machine tool in order to repeat the surface treatment, which obviously involves an unnecessary and detrimental increase in the operating times and production costs.

The above disadvantage is aggravated by the fact that the slabs are subjected to vibrations, especially during the phases of handling and transporting to their destination (by road or rail).

To a lesser extent, these disadvantages also occur when the slabs are deposited in such a manner that the polished faces are maintained in contact with one another.

In order to overcome the above disadvantages, it was proposed that a protective film be applied to the polished faces, and this solution has been adopted hitherto. This measure has been found to be efficient and satisfactory in that the damage to the polished faces has been practically eliminated.

However, account must be taken of the considerable problems associated with the methods of applying the film which make this operation difficult and onerous to carry out. The film is applied manually by an operator who, in order to carry out this operation in safe conditions, must first of all stop the machine, for example when the slab is on the roller system of the output station, apply the film and finally re-start the machine. This inevitably entails dead times which adversely affect the costs and output of the machining installation.

The principal aim of the present invention is to provide an apparatus which can apply the protective film completely automatically, thereby eliminating the above dead times and the need of using an operator.

The present invention therefore relates to an automatic apparatus for applying a protective film of plastics material to slabs of stone material leaving a machine tool used for their surface treatment, characterised in that it comprises at least one roll which supplies the film and is arranged above the path of advance of the slabs and from which the film is unwound in the direction of advance of the slabs, a device for applying adhesive to small pads, which are predetermined in terms of size and position, of the slab surface to be covered, the applicator device being arranged upstream of the film feed roll and the adhesive being preferably in the form of pads of double sided adhesive tape, pressure roller means arranged downstream of the roll for feeding the film in the direction of advance of the slabs, means for controlling the movement of the pressure roller means between an in active position and an operating position in which they engage the slabs and apply the film thereto during the latter's movement towards a discharge station of the machine tool, means for cutting the film which can be activated when the film has been applied to a slab and which are arranged downstream of the pressure roller means and can be moved horizontally and transversely with respect to the direction of advance of the slabs, and at least one pair of first lower pressure members which can cooperate with corresponding upper pressure members associated with the cutting means.

In the preferred embodiment of the present invention, the applicator device comprises a delivery reel on which is mounted a roll of tape carrying a succession of pads of double sided adhesive tape separated from one another by a desired and predetermined distance, the tape being protected in the area of the exposed face of the pads of double sided adhesive tape by a second tape made of paper or another protective material which can be readily separated from the visible surface of the individual pads, motor drive means for unwinding the tape and causing it to advance as far as an application position or station in which the pads are applied in the desired position to the upper surface of the slab, after having been freed either from the support tape or from the protective tape, a first device for rewinding the protective tape and a second device for rewinding the tape supporting the pads of double sided adhesive tape, the applicator device being mounted on support means arranged transversely with respect to the direction of advance of the slabs to be protected, and drive means for moving the applicator device along the support means as far as an application position determined by first sensor means capable of determining the position of a desired side edge of the slab, second sensor means being provided to detect and signal the front and rear edges of each slab.

The features and advantages of the apparatus according to the invention will be better appreciated from the following detailed description of a non limiting embodiment thereof which is given with reference to the appended drawings, in which:
Figure 1 is a diagrammatic side view of the apparatus showing a slab to which the film has been applied and which is advancing on the roller system of the discharge station while the application of the film to the next slab advancing on the roller system of the output station has been initiated;
Figures 2 to 6 are diagrammatic side views illustrating the sequence of the various operating phases of the apparatus according to the invention;
Figure 7 is a diagrammatic view in side elevation similar to Figure 1, on an enlarged scale;
Figure 8 is a plan view of the top of Figure 7;
Figure 9 is a detailed view of the sensor means which control the operation of the applicator device;
Figure 10 is a detailed view illustrating the methods of applying a double sided adhesive pad to the slab; and
Figure 11 is a sectional view of a portion of composite tape carrying the self adhesive pads.

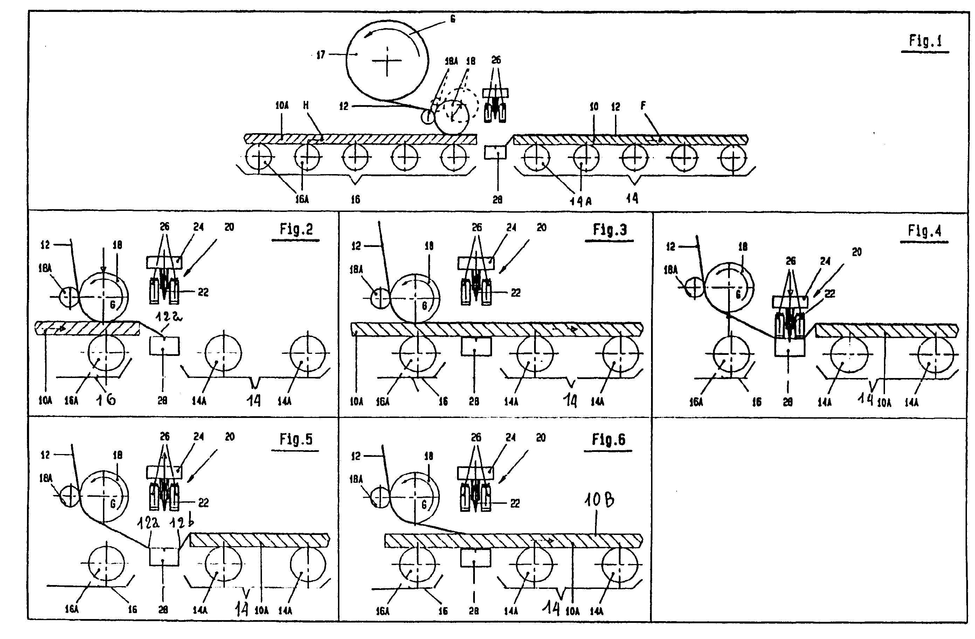

With particular reference to Figure 1, the slabs of stone material leave a machine tool, which is not shown because it is known per se, for example a machine tool of the type used for their surface treatment, and the Figure shows a first slab 10 to which the film 12 has already been applied by adhesive means and which advances in the direction of arrow F on a known motorised discharge roller system 14 of the machine tool. A second slab 10A, following the preceding slab, advances on a motorised output roller system 16 of the machine tool in the direction of arrow F.

The application of the film 12 to the latter slab 10A begins.

As the slab 10A moves along the roller system 16 it first of all meets a device for applying adhesive which is indicated generally and in its entirety by the reference numeral 50 and has the function of applying adhesive material, preferably in the form of pads of double sided adhesive tape, to the upper surface of the slab, and then the film 12 is superimposed on the adhesive material and is caused to adhere and is maintained in the desired position owing to the action of pressure roller means.

The film 12 is fed from a suitable roll 17 which is rotated in the sense of arrow G by known control means (not shown), such as, for example, an electrical motor, and is supported by means (not shown) which are also known, for example the frame of the apparatus, above the output roller system 16.

Referring now also to Figures 2 to 5, in addition to Figure 1, both the structure of the apparatus according to the present invention and the methods by which it applies the film 12 to the slab 10A of stone material, as the slab 10A is caused to advance by the associated motorised roller system 16, will now be described.

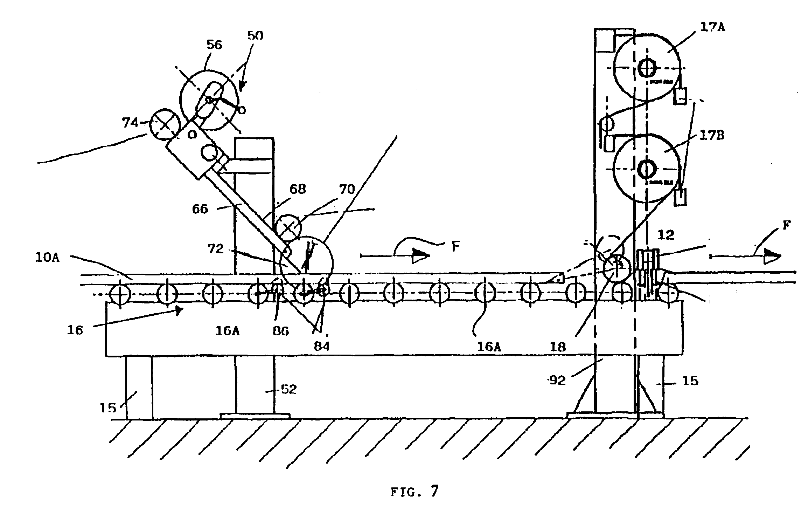

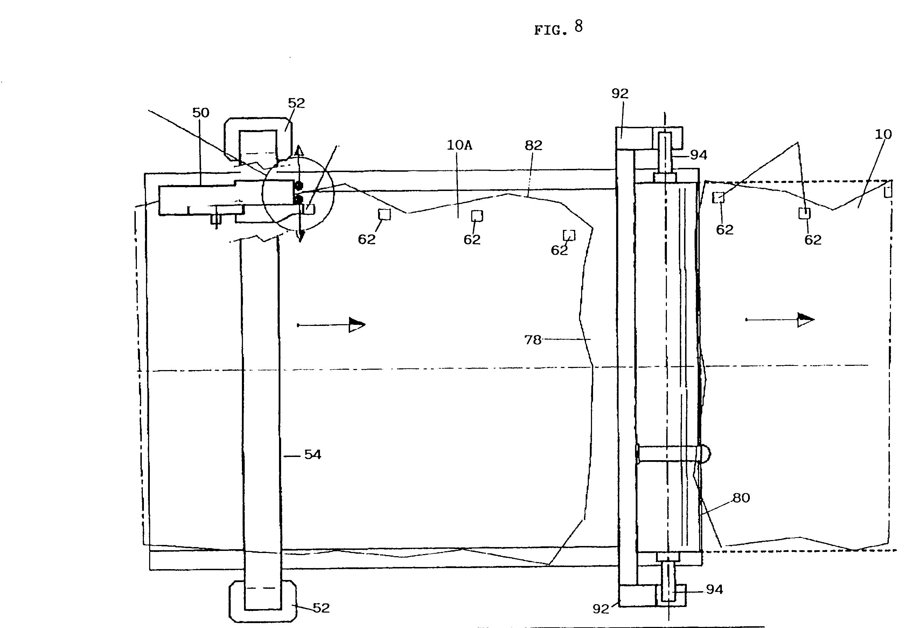

The applicator device 50 will be the subject of a special depiction, with reference to the specific Figures 7 to 11, in the course of the present description.

The application of the film 12 to the upper face of the slab 10A which already has discrete are as covered with adhesive material, is effected by pressure roller means arranged above the slab 10A and formed by a pressure roller 18 which, as is shown especially in Figure 1, can adopt two positions and, more precisely, an inactive position, represented by a broken line in the Figure 1, in which it is raised with respect to the slab 10A, and an operating position, represented by the continuous line in Figure 1, in which it engages and presses the film 12 while the latter is being deposited on the slab 10A and causes it to adhere to the discrete areas covered with adhesive material.

When the film 12 has been unwound from the roll 17, it is guided to the nip between the roller 18 and a counter-roller 18A, so that the free end of the film, each time an application cycle takes place, is maintained in position ready to be advanced until the roller 18 deposits it and presses it against the upper face of a fresh slab 10A.

So that it can be moved from the first to the second position mentioned above and vice versa, the pressure roller 18 is, for example, supported at the ends by a pair of limbs pivoted on the frame of the apparatus and controlled by known means, such as, for example, pneumatically controlled means, such as pistons or the like, which can impart to the roller 18 the force necessary to press on the film 12 so that it is applied to the areas of the slabs 10A to which adhesive has been applied.

More especially, during the application of the film 12, only a rotating movement is imparted to the pressure roller 18, this rotating movement taking place in the sense of arrow G of Figures 2 and 3 and being caused by the advance of the slab 10A in the direction of arrow F in combination with the pressure with which the roller 18 presses against the slab.

It can thus be seen why the roller 18 does not require motor means to control its rotation. Downstream of the pressure roller 18 in the direction of advance of the stone slabs, the apparatus according to the invention also comprises means for cutting the film 12 which are generally indicated by the numeral 20. In the embodiment under consideration, the cutting means 20 are formed by a known cutter of the mechanical type which opens and closes pneumatically and comprises a rotary disc blade 22 which slides on a horizontal guide 24 and is provided with a double pressure member 26 at the two sides of the disc 22. Just for the sake of clarity and ease of understanding, the two pressure members constituting the double pressure member 26 will be referred to hereinafter as upper pressure members in order to distinguish them from another pressure member with which the apparatus according to the invention is provided and which cooperates with the upper pressure members 26.

As can be seen from Figures 2 to 6, the latter pressure member is indicated by the reference numeral 28. Likewise for reasons of easy comprehension, this pressure member will be referred to as the lower pressure member and is formed, in particular, by a horizontal bar which is arranged opposite the upper pressure members 26 and the blade 22 and is of a length equal to the slide guides of the latter.

In order to promote the cutting action, the portion of the lower pressure member 28, that is to engage with the blade 22, is provided with a groove which is, for example, V shaped and into which the cutting edge of the blade 22 penetrates.

According to another feature of the apparatus according to the invention, whereas the lower pressure member 28 associated with the cutter 20 is substantially stationary, the upper pressure members 26 can move vertically, owing to the action of known control means (not shown), between a lowered position in which they both engage together with the cutting means 20 against the lower pressure member 28 and a raised position in which they are at a distance from the lower pressure member.

Considering now the operation of the apparatus according to the invention, in the state shown in Figure 1, the pressure roller 18 is in its initial or starting position which is raised with respect to the slab 10A. A predetermined length of film 12 is unwound from the feed roll 17 and the front end of the film 12 is applied to the lateral surface of the pressure roller 18 after it has passed through the nip between the rollers 18 and 18A. Once the end of the film 12 has been positioned in this manner, the pressure roller 18 is lowered into the operating position represented by the continuous line in Figure 1, at the front end of the slab 10A, so that the film 12 begins to be applied to said slab. Figure 2 also shows that the front end 12a of the film 12 projects slightly with respect to the front end of the slab 10A while the film 12 has already started to be applied to said slab. As shown in Figure 2, the pressure roller 18 is already in a slightly rearward position with respect to the front end of the slab 10A. This ensures that the entire surface of the slab to be protected is however covered.

The slab advances continuously and always in the direction of arrow F and, as a result of the combined effect of this movement and the pressure exerted by the pressure roller 18, the film 12 is applied to the entire length of the slab 10A, as is shown especially in Figure 3 which illustrates an intermediate phase of the operating cycle and in Figure 4 which illustrates the final phase of the application of the film 12 to the slab 10A.

Figure 4 shows that, when the application of the film 12 is complete, the upper pressure members 26 are lowered and brought into engagement with the lower pressure member 28 together with the cutting means 20; simultaneously with or after the cutting operation, the roller 18 itself is lifted. At this point, the cutting means 20 are activated, causing the blade 22 to move on its slide guides 24 until the cutting of the film 12 is complete, the portion of film applied to the slab 10A thus being separated from the film which remains held by the nip between the roller 18 and the counter-roller 18A, and the free end resulting from the cutting operation being available for engagement by the fresh incoming slab (optionally with the assistance of means, such as, for example, blasts of air, which can force the end into a position parallel to the plane of the slab).

It will be appreciated that at this point, as shown especially in Figures 4 and 5, the slab 10A is positioned on the rollers 14A of the discharge roller system 14 ready to be picked up and deposited in the known station for collecting the slabs.

The pressure members are disengaged in order to enable the slab 10A to be picked up and deposited in the collecting station. This also enables the rear end 12b of the portion of film 12 applied to the slab 10A to be freed and the slab can thus be moved towards the collecting station.

At this point, the apparatus is ready to carry out a fresh cycle for the application of another portion of film 12 to the next slab, so that the apparatus begins again the operation described above with reference to Figures 3 to 5. It will be appreciated that, in this second operating cycle, and naturally in the following operating cycles, the front end of the film 12 is already in position and nipped as depicted in Figure 2.

Referring now in particular to Figure 6, it can be seen that the apparatus according to the present invention, in addition to being versatile and simple in structure and in its operation for applying the film 12, has a very valuable alternative feature which consists in allowing a stone slab to pass through without the application of the film 12. It is sufficient to maintain the apparatus in its final state of the operating cycle for applying the film 12 illustrated in Figure 6 throughout the entire passage time of a slab 10B which is therefore not provided with the protective film.

Figures 7 to 11 will now be considered with specific reference to the applicator device 50, the roller system 16 in this case being shown in the version provided with support limbs or columns 15.

Associated with the roller system 16 is a first portal comprising two vertical pillars 52 and a horizontal crosspiece 54 on which the applicator device 50 is mounted so that it can slide along the crosspiece in a controlled manner, for example by means of a motor (not shown) or a manual control wheel (likewise not shown).

The applicator device 50 comprises a delivery device on which is mounted a roll 56 of composite tape 58 formed by a support tape 60 on which pads 62 of a conventional double sided adhesive tape are applied at predetermined intervals, in the same manner as label tapes used in labelling machines.

In this case, because the pads are adhesive on both sides, a second protective tape 64 is provided which covers the exposed adhesive side of said pads which are thus interposed between the two above mentioned tapes.

A particular concern is the choice of adhesives used for the two faces of the double sided adhesive pads; in order to permit easy removal of the film 12 from the slab 10 and in order that the removal should take place in such a manner that the double sided adhesive pads are also removed at the same time, the adhesive disposed on the face of the pads 62 that comes into contact with the slab 10A to which adhesive has been applied must be such that the respective adhesive force is less than that maintaining the opposing face of the double sided adhesive pad joined to the film 12.

The choice of suitable adhesives which satisfy this condition is readily made from among the adhesives available in the art.

The composite tape is unwound from the roll 56 in a manner opposed by a resilient arm, in order to establish sufficient tension in the composite tape, and is directed to a system of guide and return rollers (known per se and not shown) in order to convey the composite tape to an applicator arm 66, in correspondence with which the double sided adhesive pads 62 are freed in succession first from the protective tape 64 and then from the support tape 60 and applied directly to the surface of the slab 10A.

To that end, the composite tape 58 in the initial portion of the applicator arm 66 is subjected to the action of a delaminating blade 68 arranged with the cutting edge in a transverse arrangement with respect to the direction of movement of the composite tape.

After an initial phase of starting the operation of the device, the blade detaches and deflects the protective tape 64 with respect to the upper face of each double sided adhesive pad 62, directing the protective tape 64 to a motorised rewinding device 70. It is clear that, if the detachment and rewinding of the upper protective tape are suitably initiated, the cutting edge of the blade 68 can be raised to a sufficient extent not to cut into the thin adhesive layer covering the upper surface of the double sided adhesive pads 62. In this state, the support tape 60 carrying the double sided adhesive pads 62 is caused to advance as far as the end of the applicator arm 66, which end comprises a thin sheet 72 of flexible and anti-adhesive material, for example string steel, as a result of which the support tape 60 is deflected around the free edge or corner of the sheet 72.

Consequently, the double sided adhesive pad 62 detaches itself naturally from the support tape and, because the detachment is gradual, it interacts with the upper surface of the moving slab 10A below to which it adheres by natural action.

Once it has completed the deflection at an acute angle about the free edge of the sheet 72 and now that it has been freed from the double sided adhesive pad 62, the support tape 60 continues its course towards a rewinding device which is likewise advantageously motorised.

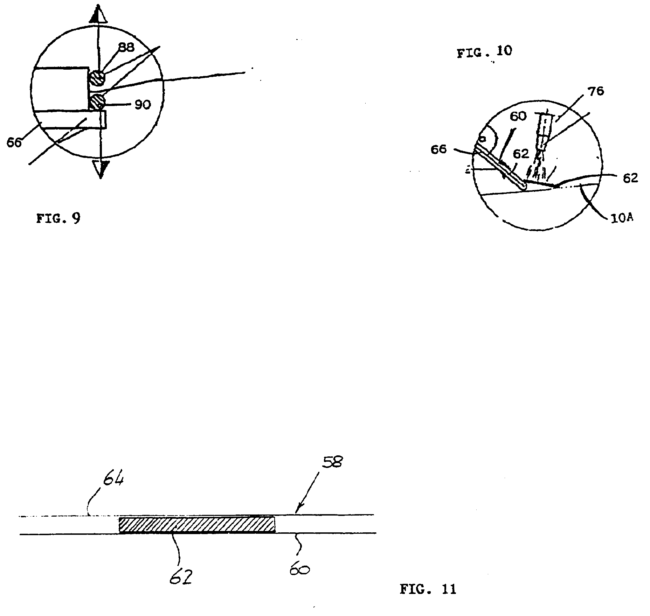

In order to promote the correct positioning and the application of the double sided adhesive pad to the surface of the slab 10A, auxiliary means are preferably provided, such as a blower nozzle 76, which ensures that the front end of the double sided adhesive pad is directed downwards in the inclined state by the end of the sheet, in such a manner that it is securely supported on the surface of the slab 10A below (as illustrated in detail in Figure 10).

In addition, a detector, for example having a photo electric cell (not shown because it is already known from the above mentioned labelling machines) is provided as a security means on the path of the composite tape 58, preferably downstream of the first rewinding device 70, in order to verify the presence of a double sided adhesive pad which is to be positioned on the upper surface of the slab 10A and consequently to give permission for the operation of the motor for advancing the composite tape.

As already mentioned above, the slabs to be protected with the plastics film are ones which, in one of the phases of the overall operation which extends from the initial block (that is to say, that resulting from the excavation) to the final manufactured product, have to be temporarily stacked on their sides, that is to say, with the principal surfaces in contact with one another.

However, these slabs may have different dimensions and, in addition, for example in the case of slabs which have just been sawn and ground, may have irregular side edges.

It will thus be appreciated that, before proceeding with the application of the pads of double sided adhesive material, it is necessary to carry out measurements by sensing, and more specifically:
(a) to determine the position of the front edge 78 of the slab in order to give the necessary consent signal for the activation of the device for applying the double sided adhesive pads;
(b) to determine the position of the rear edge 80 of the slab in order to interrupt the operation of the above applicator device and to activate the means for cutting the plastics film;
(c) to determine the position of one of the side edges 82 of the slab in order to control the movement of the applicator device 50 along the crosspiece 54 on which the device is mounted, until it is brought into the proper position (one or more centimetres inside the side edge) for applying the double sided adhesive pad.

In this respect, it should be noted that, in accordance with the present invention and in particular in accordance with a preferred embodiment, the pads of double sided adhesive material are applied just at and parallel to the side edge 82 to be sensed, because practical tests have demonstrated that this achieves sufficient anchorage of the plastics film to the stone slab, especially when the slabs are later arranged on their sides with said edge arranged at the top so that the protective sheet of plastics film drops by gravity, since it is only maintained on the slab at the above mentioned edge of the slab.

In other words, the edge 82 chosen for the sensing operation and the application of the double sided adhesive pads is the one which will be arranged at the top in the final stack.

As regards the sensing of the front and rear edges of the slabs, sensors 84 and 86, (see Fig. 7) for example in the form of microswitches or limit switches, are preferably provided and are mounted on the lower portion of the roller system 16 and project with respect to the upper generatrix of the rollers 16A so that they are activated and deactivated as the slab 16A passes them.

The signal emitted by the sensors is sent, in the case of the sensor of the incoming edge 78, as the consent signal for the activation of the applicator device 50 and for the activation of the device for unwinding the protective film 12.

On the other hand, in the case of the sensor of the lagging edge 80, the signal following activation is also sent to the applicator device 50 as the signal for stopping operation, to the film feed device 12, in this case also for stopping operation, and finally to the pressure means and to the blade for cutting the film at a predetermined distance from the rear end of the slab which has already been covered by the protective film.

Reference will now be made to the sensor means or means for detecting a side edge of the slab, which preferably comprise a pair of sensors 88 and 90 (Fig. 9), for example ultrasound sensors, which are aligned with and at a distance from a plane positioned transversely with respect to the direction of advance of the slabs.

In this case, when one of the two sensors, that is to say, the sensor 88, is activated while the other, 90, which is closer to the centre line of the roller system 16 remains deactivated, that is to say, covered by the side edge of the slab, it is clear that the pair of sensors is centred with respect to or straddles the side edge 82 of the slab: at this point, it is sufficient to actuate the motor means for moving the applicator device 50 along the transverse bar 54 of the portal type support in such a manner as to position the applicator sheet 72 in the correct position for depositing a double sided adhesive pad 62 on the slab 10A below.

Figure 7 shows a variant of the apparatus with respect to the embodiment of Figure 1, which variant consists in providing a plurality of rolls of protective film 12, indicated for convenience by the reference numerals 17A, 17B, it being understood that there may be more than two, in order to enable the operator to select the width of the film 12 in accordance with the dimensions of the slabs, the rolls being mounted on a vertical portal type support comprising the pillars 92 and the seats for the journals 94 of the rollers carrying the rolls 17.

In the above description, reference has been made to the application of double sided adhesive pads 62, but it will be appreciated that it is within the scope of the present invention to use spray elements that can deposit in predetermined areas of the upper surface of the slab 10A a modest amount of an adhesive that can maintain the film 12 in the desired position in the same manner as the double sided adhesive pads 62.

In this case, the applicator device 50 comprises a reservoir of adhesive associated with a spray nozzle which, subject to the permission of the above mentioned sensor means, forms a small adhesive layer equivalent in dimensions and function to a double sided adhesive pad 62.

Alternatively, the composite tape 58 could be formed by a continuous intermediate layer of double sided adhesive tape, and in this case blade means are provided which, at the sheet 72, cut a portion of tape suitable for the desired function.

Finally, it should be emphasised that the frequent reference to labelling machines is intended to mean that the applicator device 50 provided in the apparatus for applying the protective film is substantially identical to said machines, except that the labels are adhesive on both sides and the operation of the labelling machine is subject to the control and consent of the above mentioned sensor means.

It will be appreciated from the above that the apparatus can be programmed or in any case controlled, as required, to prepare all the slabs provided with protective film or slabs with and without said film in alternation in any desired number.

Finally, it should be noted that the film 12 is a known film which is porous or in any case suitably perforated in order to prevent difficulties with the pick up and discharge means, which are usually of the suction cup type, during the discharge of the slab from the discharge roller system 14. It will be appreciated that a more or less close meshed network could be used instead of the film 12.

With reference to the above, it may be noted that the application of the film 12 to the slabs of stone material is preferably carried out in the output station of the machine tool because, if it were carried out in the discharge station, the means applying the film 12 would interfere with the means ensuring the discharge of the slab.

According to another variant, the apparatus according to the present invention may be supplied with self-adhesive film, in which case the applicator device 50 will be omitted.

According to another variant of the present invention, adhesive material, whether in the form of a directly sprayed adhesive or in the form of pads of double sided adhesive tape, may be applied directly to the face of the film that is to come into contact with the surface of the slab 10A to be protected.

At least, it will be appreciated that structurally and functionally equivalent variants and/or modifications may be applied to the apparatus according to the present invention without departing from its scope of coverage.

## Claims

1. Automatic apparatus for applying a protective film of plastics material to slabs of stone material leaving a machine tool used for their surface treatment, characterized in that it comprises at least one roll (17) which supplies the film (12) and is arranged above the path of advance of the slabs (10, 10A) and from which the film (12) is unwound in the direction of advance of the slabs (10, 10A), a device (50) for applying adhesive to small areas, which are predetermined in terms of size and position, of the slab surface to be covered, the applicator device (50) being arranged upstream of the film feed roll (17) and the adhesive being preferably in the form of pads of double sided adhesive tape, pressure roller means arranged downstream of the roll (17) for feeding the film (12) in the direction of advance of the slabs, means for controlling the movement of the pressure roller means (18) between an inactive position and an operating position in which they engage the slabs and apply the film (12) thereto during the latter's movement towards a discharge station of the machine tool, means (20) for cutting the film (12) which can be activated when the film has been applied to a slab and which are arranged downstream of the pressure roller means (18) and can be moved horizontally and transversely with respect to the direction of advance of the slabs, and at least one pair of first lower pressure members (28) which can cooperate with corresponding upper pressure members (26) associated with the cutting means (20).

2. Apparatus according to Claim 1, characterized in that a lower pressure member (28) which can cooperate with corresponding upper pressure members (26) is associated with the cutting means (20).

3. Apparatus according to Claim 2, characterised in that the lower pressure member (28) can simultaneously engage the blade (22) of the cutting means (20), thus constituting the counter blade.

4. Apparatus according to Claims 1 and 2, characterized in that, during or after the phase of cutting the film (12), the means (18) for pressing the film (12) onto the slabs (10, 10A) are also raised.

5. Apparatus according to Claim 1, characterized in that, in order to apply the front end of the film (12) to the front end of a slab (10, 10A), the pressure means (18) are lowered and caused to engage the slab (10, 10A).

6. Apparatus according to Claim 1, characterized in that the means (18) for pressing the film (12) are formed by at least one roller (18) which is supported in a freely rotating manner by the frame of the apparatus and which is caused to rotate by its pressure contact with the slabs (10, 10A) and by a counter-roller (18A) which is in constant engagement with the roller (18) in order to maintain the film (12) in permanent contact and engagement with the pressure roller (18).

7. Apparatus according to Claim 1, characterized in that, upstream of the position where the front end of the film (12) engages a fresh slab (10A) to be covered, there is provided a device (50) for applying an adhesive to small predetermined pads of the upper surface of the slab so that the subsequent application of the film (12) over said small areas and the activation of the pressure means (18) ensure that the film (12) is maintained securely on the slab surface to be protected and performs the desired protective action.

8. Apparatus according to Claim 7, characterized in that the adhesive is formed by pads of double sided adhesive tape, and the adhesives which cover the two faces thereof differ from one another and are selected in such a manner that the strength of adhesion between a pad and a stone slab is substantially less than that between a pad and the plastics film.

9. Apparatus according to Claim 7, characterized in that the device comprises a delivery reel (56) on which is mounted a roll of tape carrying a succession of pads of double sided adhesive tape separated from one another by a desired and predetermined distance, the tape being protected in the area of the exposed face of the pads of double sided adhesive tape by a second tape (64) made of paper or another protective material which can be readily separated from the visible surface of the individual pads, motorised drive means for unwinding the tape and causing it to advance as far as an application position or station in which the pads are applied in the desired position to the upper surface of the slab after having been freed either from the support tape or from the protective tape, a first device for rewinding the protective tape and a second device for rewinding the tape supporting the pads of double sided adhesive tape, the applicator device (50) being mounted on support means arranged transversely with respect to the direction of advance of the slabs to be protected, and drive means for moving the applicator device along the support means as far as an application position determined by first sensor means (84) capable of determining the position of a desired side edge of the slab, second sensor means (86) being provided to detect and signal the front and rear edges of each slab.

10. Apparatus according to Claim 9, characterized in that the applicator device (50) comprises an applicator arm terminating at the downstream end, relative to the direction of advance of the composite pad, in a flexible sheet of anti-adhesive material around the end edge of which is curved the support tape carrying the double sided adhesive pads already freed, upstream, from the protective tape, so that the support tape performs an elbow bend which causes the double sided adhesive pad to be detached and deposited on the slab below.

11. Apparatus according to Claim 10, characterized in that a blower nozzle (76) is provided which can urge the double sided adhesive pad to deposit itself correctly on the slab.

12. Apparatus according to Claim 9, characterized in that the first sensor means (84) comprise a pair of detectors, the signal of which is emitted when they straddle the selected side edge of the slab.

13. Apparatus according to Claim 12, characterized in that the first sensor means (84) comprise a pair of ultrasound emitter receivers.

14. Apparatus according to Claim 9, characterized in that the second sensor means (86) comprise limit microswitches projecting towards the top of the roller system downstream and upstream, respectively, of the device for applying double sided adhesive pads.

15. Apparatus according to Claim 9, characterized in that there is provided aplurality of film carrying rolls which can be selected in accordance with the dimensions of the slabs to be covered with the protective film.

16. Apparatus according to Claim 7, characterized in that the adhesive is sprayed from a spray nozzle, supplied from a suitable reservoir, in areas of the slab having the dimensions of and in the positions of the pads of double sided adhesive material.
